**Europäisches Patentamt**

**European Patent Office**

**Office européen des brevets**

(11) Veröffentlichungsnummer : **0 137 253**
**B1**

(12) **EUROPÄISCHE PATENTSCHRIFT**

(45) Veröffentlichungstag der Patentschrift :
**30.12.86**

(51) Int. Cl.⁴ : **B 60 K 20/04**.

(21) Anmeldenummer : **84109998.9**

(22) Anmeldetag : **22.08.84**

(54) **Vorrichtung zum Abstützen eines Getriebeschalthebels eines Kraftfahrzeuges.**

(30) Priorität : **24.09.83 DE 3334621**

(43) Veröffentlichungstag der Anmeldung :
**17.04.85 Patentblatt 85/16**

(45) Bekanntmachung des Hinweises auf die Patenterteilung : **30.12.86 Patentblatt 86/52**

(84) Benannte Vertragsstaaten :
**DE FR GB IT SE**

(56) Entgegenhaltungen :
**DE-A- 1 901 702**
**DE-A- 3 216 688**
**FR-A- 2 103 924**
**FR-A- 2 118 585**
**FR-A- 2 191 652**

(73) Patentinhaber : **Dr.Ing.h.c. F. Porsche Aktiengesellschaft**
**Porschestrasse 42**
**D-7000 Stuttgart 40 (DE)**

(72) Erfinder : **von Sivers, Rolf, Ing. grad.**
**Gebersheimer Strasse 7/1**
**D-7255 Rutesheim (DE)**
Erfinder : **Knape, Dieter**
**Waiblinger Strasse 14**
**D-7100 Heilbronn (DE)**

**Beschreibung**

Die Erfindung bezieht sich auf eine Vorrichtung zum Abstützen eines Getriebeschalthebels nach dem Oberbegriff des Anspruchs 1.

Es ist eine Abstützvorrichtung für einen Getriebeschalthebel eines Kraftfahrzeugs aus der DE-A-32 16 688 bekannt geworden, bei der der Schalthebel in einem elastischen Block schwenkbar gehalten ist. Hierdurch sollen unerwünschte, vom Getriebe zum Schalthebel über die Schaltstange übertragene Schwingungen gedämpft werden. Es hat sich aber als nachteilig bei einer relativ weichen Lagerung herausgestellt, daß dann kein sicheres Schaltgefühl mehr vorhanden ist und eine exakte Gangwahl erschwert wird.

Der Erfindung liegt die Aufgabe zugrunde, eine Abstützvorrichtung der eingangs genannten Art zu schaffen, mit der ein positives Gangwählgefühl trotz relativ weicher Auslegung der Schalthebellagerung erzielt wird. Die Aufgabe wird erfindungsgemäss durch die Merkmale des Kennzeichens des Anspruches 1 gelöst.

Die mit der Erfindung hauptsächlich erzielten Vorteile bestehen darin, daß eine Schwingungsübertragung vom Getriebe über die Schaltstange und den Schalthebel zur Karosserie weitgehend unterbunden wird. Dies erfolgt im wesentlichen durch eine relativ weiche elastische Lagerung des Schalthebels, welche in Leerlaufstellung frei schwingend und in Schaltstellung relativ frei schwingend zum Fahrzeugboden und somit schwingungsentkoppelnd wirkend angeordnet ist. Zur Erzielung eines positiven Gangwählgefühls, d.h. um trotz der Weichheit des Lagers noch eine steife und exakte Führung des Schalthebels zu ermöglichen, wird bei der Bewegung des Hebels von der Vorwählgasse in die Schaltgassen, vor dem eigentlichen Schalten in die Endstellungen, eine zunehmende Vorspannung des elastischen Lagers in Längs- und Querrichtung erzielt. Zur Überwindung der in Längs- und Querrichtung unterschiedlichen Schaltkräfte sind zur Erzielung einer exakten Schalthebelführung in diesen Richtungen verschiedene Kennungen vorgesehen. So ist das elastische Lager in Längsrichtung ausgeführt als in Querrichtung, zumal in diesen Richtungen zusätzlich hohe Vibrationen absorbiert werden sollen. Damit nach einem vorgegebenen Wählweg eine exakte und steife Führung des Schalthebels gewährleistet ist, sind insbesondere für den Rückwärtsgang und den fünften Gang äußere Vorwählanschläge am Lagerbock vorgesehen. Diese bewirken eine erhöhte definierte Vorspannung des elastischen Elements nach einem entsprechenden Weg, zumal gerade zum Schalten dieser Gänge Schaltsperren zu überwinden sind und eine Auslenkung des Schalthebels vermieden werden soll.

Ein Ausführungsbeispiel der Erfindung ist in der Zeichnung dargestellt und wird im folgenden näher beschrieben.

Es zeigt

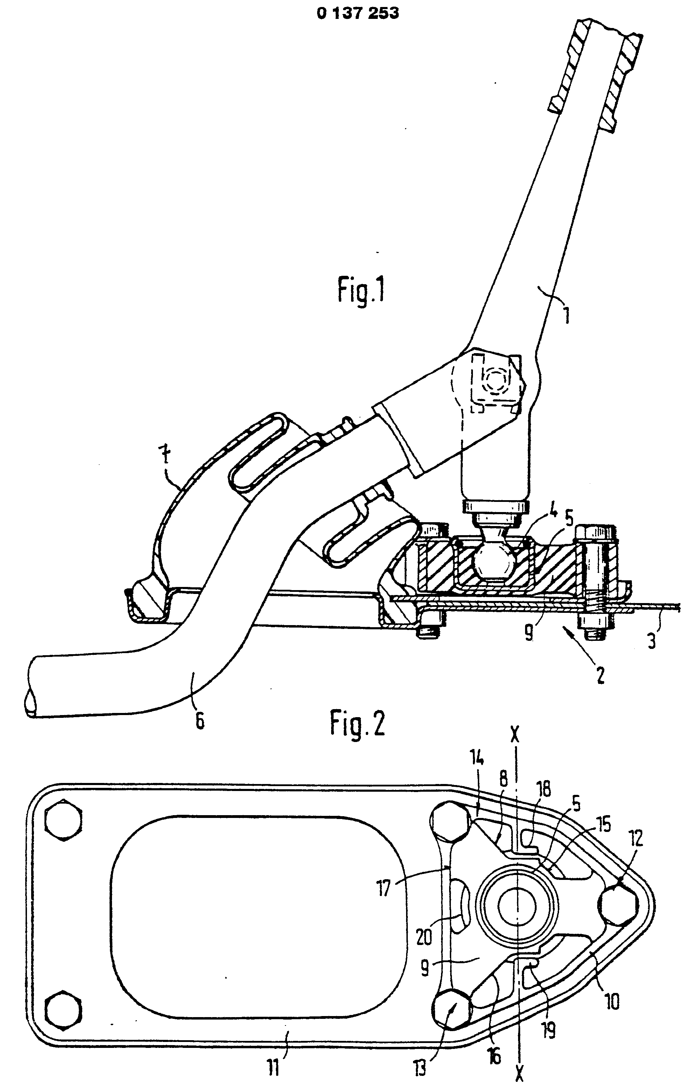

Figur 1 eine Seitenansicht einer Abstützvorrichtung für einen Schalthebel, teilweise im Schnitt, und

Figur 2 eine Draufsicht der Abstützvorrichtung.

Der Schalthebel 1 für ein Kraftfahrzeuggetriebe ist in einer Abstützvorrichtung 2 am Fahrzeugboden 3 gehalten. Er weist an seinem unteren freien Ende einen kugelförmigen Abschnitt 4 auf, der in einer Aufnahme 5 aus Kunststoff oder dergleichen schwenkbar angeordnet ist. Mit dem Schalthebel 1 ist eine zum Getriebe führende Schaltstange 6 gelenkig verbunden, die von einer Dichtstulpe 7 im Bereich des Bodens 3 umgeben ist.

Die Abstützvorrichtung 2 umfasst im wesentlichen eine elastische Stützeinheit 8, welche aus einem dreieckförmig ausgebildeten Block 9 mit drei Armen besteht, die sich endseitig bei 12, 13 und 14 in einem Lagerbock 10 eines Schaltgehäuses 11 abstützen. Zentrisch eingebettet in den elastischen Block 9 ist die Aufnahme 5 mit dem kugelförmigen Abschnitt 4 der Schaltstange 1. Der Lagerbock 10 ist mit dem Block 9 einstückig und ist am Fahrzeugboden 3 über Schrauben festgesetzt.

Der elastische Block 9 bildet ein schwingungsdämpfendes Element, das aufgrund seiner Ausbildung und Anordnung im Lagerbock 10 und zur Aufbaustruktur 3 schwingungsentkoppelnd den Schalthebel 1 hält. Zu diesem Zweck ist der elastische Block 9 im wesentlichen nur an seinen Eckpunkten 12, 13 und 14 mit dem Lagerbock 10 verbunden. Die seitlichen Flächen (Katheten) 15 und 16 des Blocks 9 sowie die Unterfläche und die Querfläche 17 liegen in der Leerlaufstellung des Schalthebels 1 frei vom Lagerbock 10. Durch diese Anordnung wird ein frei schwingbares Abstützsystem für den Schalthebel in Hoch-, Quer- und Längsrichtung geschaffen. Unterstützend wirkt noch die Niere 20 in der vorderen Querfläche 17 des Blocks 9. Insgesamt ist der elastische Block 9 in der Weise ausgelegt, daß in den Schaltstellungen in Fahrzeuglängsrichtung, also insbesondere für die Gänge 1, 2, 3 und 4 eine größere Vorspannung des elastischen Blocks 9 herrscht als in Fahrzeugquerrichtung, in denen die Vorwählgassen für den Rückwärts- und den fünften Gang liegen.

Zum Erzielen einer exakten und steifen Führung des Schalthebels 1 zu den einzelnen Schaltgassen der Gänge ist es erforderlich, daß die in Leerlaufstellung herrschende Weichheit des Blocks 9 soweit vermindert wird, daß ein sicheres Schaltgefühl für den Benutzer entsteht. Hierzu sind insbesondere in Fahrzeugquerrichtung am Lagerbock 10 Vorwählanschläge 18, 19 vorgesehen, die mit den Seitenflächen 15, 16 des Blocks 9 zusammenarbeiten. Es wird hierdurch nach einem relativ kurzen Weg in der Vorwählgasse zum Rückwärts- und zum fünften Gang eine progressiv ansteigende Vorspannung im Block 9 und somit eine exakte und stabile Führung des Schalthebels 1 erzielt. Auch ist die beidseitige gleiche Abstützung über die Anschläge 18, 19 erforderlich, damit zur Überdrückung der Schaltsperren des Rückwärts- und des fünften Gangs ein Ausweichen der Aufnahme 5 im Block 9 und somit des Schalthebels 1 vermieden wird. Die Vorwählanschläge 18 und 19 sind vorzugsweise in einer durch die Mittenachse des Schalthebels 1 verlaufenden vertikalen Querebene X-X angeordnet.

## Patentansprüche

1. Vorrichtung zum Abstützen eines Getriebeschalthebels (1) eines Kraftfahrzeugs in einer am Fahrzeugboden (3) gehaltenen Stützeinheit (8), die in einem Schaltgehäuse angeordnet ist und einen in einer Aufnahme (5) schwenkbar gelagerten kugelförmigen Abschnitt (4) am Getriebeschalthebel (1) aufnimmt und mit diesem eine oberhalb des kugelförmigen Abschnitts (4) angeordnete Schaltstange (6) gelenkig verbunden ist, dadurch gekennzeichnet, daß die elastische Stützeinheit (8) durch ein die Aufnahme (5) des Schalthebels (1) umgreifendes schwingungsdämpfendes Element (9) gebildet wird, das die Schaltstange (1) entkoppelt zum Fahrzeugaufbau (3) hält und mit einer solchen Vorspannung in einen Lagerbock (10) eingebettet ist, daß beim Bewegen des Schalthebels (1) in eine Schaltstellung eine zunehmend steifere Führung des Schalthebels (1) erzeugt wird.

2. Vorrichtung nach Anspruch 1, dadurch gekennzeichnet, daß die Stützeinheit (8) aus einem dreieckförmig ausgebildeten elastischen gummiartigen Block (9) besteht, der in Leerlaufstellung im Lagerblock (10) frei schwingend in Hoch-, Quer- und Längsrichtung gehalten ist.

3. Vorrichtung nach den Ansprüchen 1 oder 2, dadurch gekennzeichnet, daß der elastische Block (9) in Schaltrichtung längs zum Fahrzeug in der Anfangsvorspannung härter ausgeführt ist als in Schaltrichtung quer zum Fahrzeug.

4. Vorrichtung nach den Ansprüchen 1, 2 oder 3, dadurch gekennzeichnet, daß der elastische Block (9) jeweils über seine Eckpunkte (12, 13, 14) im Lagerblock (10) abgestützt ist, wobei die in Fahrzeugquerebene wirkenden Seitenflächen (15, 16) in Leerlaufstellung des Schalthebels (1) freiliegend zu gegenüberstehenden Seitenflächen des Lagerbocks (10) sind und diese in Schaltstellung mit lagerbockseitigen Vorwählanschlägen (18, 19) zusammenarbeiten.

5. Vorrichtung nach Anspruch 4, dadurch gekennzeichnet, daß die Vorwählanschläge (18, 19) in einer durch die Mittenachse des Schalthebels (1) verlaufenden vertikalen Querebene (X-X) angeordnet sind.

6. Vorrichtung nach einem oder mehreren der vorhergehenden Ansprüche, dadurch gekennzeichnet, daß die Vorwählanschläge (18, 19) derart angeordnet sind, daß die Vorspannung in Querrichtung des elastischen Blocks (9) in den Vorwählstellungen zum Rückwärtsgang und zum fünften Gang durch Anlage an die Anschläge (18, 19) progressiv ansteigt.

## Claims

1. An apparatus for supporting a gear-shift lever (1) of a motor vehicle in a resilient support unit (8) which is held on the floor (3) of the vehicle and which is disposed in a gear-shift casing and receives a spherical portion (4) on the gear-shift lever (1) pivotably mounted in a receiving means (5) and a gear-shift rod (6) disposed above the spherical portion (4) is connected in an articulated manner to the gear-shift lever (1), characterized in that the resilient support unit (8) is formed by a vibration-damping element (9) which embraces the receiving means (5) of the gear-shift lever (1) and which keeps the gear-shift lever (1) detached from the structure of the vehicle and is embedded in a bearing block with such pretensioning that as the gear-shift lever (1) moves into a shifting position an increasingly stiffer guidance of the gear-shift lever (1) is produced.

2. An apparatus according to Claim 1, characterized in that the support unit (8) comprises a resilient rubber-like block (9) which formed as a triangle and which in the idling position is held in the bearing block (10) freely oscillating in the vertical, transverse and longitudinal directions.

3. An apparatus according to Claim 1 or 2, characterized in that the resilient element (9) is made harder in the initial pre-tensioning in the gear-shift direction longitudinally to the vehicle than in the gear-shift direction transversely to the vehicle.

4. An apparatus according to Claim 1, 2 or 3, characterized in that the element (9) is supported in the bearing block (10) by way of its corner points (12, 13, 14) in each case, the lateral faces (15, 16) which act in the transverse plane of the vehicle being overhung in the idling position of the gear-shift lever (1) with respect to opposite lateral faces of the bearing block (10) and the said lateral faces cooperating in the gear-shifting position with pre-selection stops (18, 19) on the side of the bearing block.

5. An apparatus according to Claim 4, characterized in that the pre-selection stops (18, 19) are disposed in a vertical transverse plan (X-X) extending through the median axis of the gear-shift lever (1).

6. An apparatus according to one or more of the preceding Claims, characterized in that the pre-selection stops (18, 19) are arranged in such a way the pre-tensioning in the transverse direction of the element (9) increases progressively in the pre-selection positions to the reverse gear and to the fifth gear by bearing on the stops (18, 19).

## Revendications

1. Dispositif de montage d'un levier de changement de vitesses (1) d'un véhicule à moteur dans une monture (8) fixée au plancher (3) du véhicule, disposée de manière à former un boîtier de changement de vitesses et à recevoir dans un logement (5) une partie (4) du levier de changement de vitesses (1) en forme de rotule montée de manière oscillante, une tige (6) de changement de vitesses étant articulée sur ce levier (1) au-dessus de sa partie (4) en forme de rotule, caractérisé en ce que la monture élastique (8) est constituée d'un élément (9) amortisseur de vibrations entourant le logement (5) de la rotule (4) du levier (1), cet élément (9) maintenant la tige (6) de changement de vitesses découplée par rapport à la structure (3) du véhicule, et en ce que ladite monture (8) est encastrée dans un support (10) avec une précontrainte telle que, lorsque le levier (1) est manœuvré pour engager une des vitesses, un guidage de raideur croissante s'exerce sur ce levier (1).

2. Dispositif selon la revendication 1, caractérisé en ce que la monture (8) est constituée d'un bloc triangulaire (9) de matière élastique analogue au caoutchouc, qui, en position de point mort, est tenu dans le support (10) de manière à osciller librement en hauteur, en largeur et longitudinalement.

3. Dispositif selon les revendications 1 ou 2, caractérisé en ce que le bloc élastique (9) est réalisé, dans sa précontrainte initiale, avec plus de dureté dans le sens de manœuvre du changement de vitesses selon l'axe longitudinal du véhicule, que dans le sens transversal à cet axe.

4. Dispositif selon les revendications 1, 2 ou 3, caractérisé en ce que le bloc élastique (9) prend appui par chacun de ses angles (12, 13, 14) dans le support (10), de telle sorte que les surfaces latérales (15, 16) agissant dans le plan transversal du véhicule sont librement mobiles par rapport aux surfaces latérales du support (10) leur faisant face, et en ce que lesdites surfaces latérales (15, 16) du bloc (9) coopèrent avec des butées (18, 19) de présélection ménagées sur les côtés du support (10).

5. Dispositif selon la revendication 4, caractérisé en ce que les butées de présélection (18, 19) sont disposées dans un plan transversal vertical (X-X) passant par l'axe médian du levier de changement de vitesses (1).

6. Dispositif selon une ou plusieurs des revendications précédentes, caractérisé en ce que les butées de présélection (18, 19) sont disposées de telle sorte que la précontrainte augmente progressivement dans le sens transversal du bloc élastique (9) dans les positions de présélection pour la marche arrière et pour la cinquième vitesse, par appui contre les butées (18, 19).

Fig.1

Fig.2